# EUROPÄISCHE PATENTSCHRIFT

(11) **EP 1 856 965 B1**
(45) Veröffentlichungstag und Bekanntmachung des Hinweises auf die Patenterteilung: **29.07.2009**
(21) Anmeldenummer: 06010335.5
(22) Anmeldetag: 19.05.2006
(51) Int. Cl.: A01B 61/04

(54) **Drehpflug mit Überlastsicherung**
Reversible plough with overload safety device
Charrue réversible avec dispositif de sécurité contre la surcharge

(43) Veröffentlichungstag der Anmeldung: 21.11.2007
(73) Patentinhaber: Lemken GmbH & Co. KG, 46519 Alpen (DE)
(72) Erfinder: Meurs, Wilhelm, 46519 Alpen (DE)
(74) Vertreter: Schulte, Jens Michael

(56) Entgegenhaltungen:
- EP-A1- 0 037 848
- DE-A1- 3 152 450
- FR-A- 2 090 170
- US-A- 4 189 007

## Beschreibung

Die Erfindung betrifft einen Drehpflug mit Überlastsicherung mit mindestens einem T-förmigen Grindel mit Körperhalmen und daran angeordneten Pflugkörpern, wobei der Grindel um eine in Arbeitsstellung des Drehpfluges horizontal und quer angeordnete Querachse schwenkbar über eine Konsole mit dem Pflugrahmen verbunden ist und über Abstützelemente und einen Energiespeicher in Arbeitsstellung gehalten wird.

Derartige Drehpflüge sind bereits der europäischen Patentanmeldung EP 0 229 484 und auch der deutschen Offenlegungsschrift DE 41 17 949 zu entnehmen. Die jeweiligen T-förmigen Grindel werden über Abstützelemente und Energiespeicher in Arbeitsstellung gehalten, wobei die Abstützelemente kompliziert und aufwendig angeordnet sind und viele Umlenkmittel aufweisen. Diese Ausführungen fördern den Verschleiß, sind aufwendig und teuer.

Aus der FR-A-2 090 170 sind mehrere Ausführungen einer Überlastsicherung zu entnehmen. Nach der Darstellung Figur 11 weist der Grindel endseitig zwei entgegengerichtete Nasen auf, die einen Zapfen tragen, um die je eine Lasche schwenkbar ist, die mit ihrem freien Ende und dem dort ausgebildeten Schlitz einen Zapfen der Federgabel umgreift. Über einen weiteren Zapfen ist die Lasche mit zwei entgegen gesetzten Armen auf dem Pflugrahmen verbunden. Wird nun der Grindel verschwenkt, soll über die jeweils gegenüberliegende Lasche und ihre Abstützung an den Laschen und entgegen gesetzten Armen die Feder zusammengedrückt werden. Dieses Zusammendrücken erfolgt somit über ein umständliches Übersetzungsgetriebe, sodass viel Reibung auftritt und anschließend für das Zurückdrücken des Grindels in der Regel die notwendige Kraft nicht zur Verfügung steht. Aus der EP-A-0 037 848 ist die Verwendung von Hydraulikzylindern als Druckspeicher bekannt. Er wird allerdings bei einer Steinsicherung für Beetpflüge eingesetzt. Die DE-A-31 52 450 zeigt einen Volldrehpflug mit Überlastsicherheitsvorrichtung, die auch ein Ausweichen nach oben oder zur Seite erlaubt. Sie verfügt über eine Vierpunktauflage, die ein gleichzeitiges Ausweichen nicht zulässt. Gerade dies ist aber in der Regel notwendig, um Schäden sicher zu verhindern.

Der Erfindung liegt die Aufgabe zugrunde, einen Drehpflug mit einfacher und robuster Überlastsicherung zu schaffen, die praktisch keine Umlenkteile aufweist, wenig Bauteile beinhaltet und bei der sich die Abstützelemente möglichst direkt auf den jeweiligen Energiespeicher einwirken.

Die Aufgabe wird erfindungsgemäß durch die Merkmale des kennzeichnenden Teiles des Patentanspruches 1 gelöst. Dadurch dass sich die als Stützstreben ausgebildeten Abstützelemente über ein Führungsteil direkt auf den Energiespeicher abstützen, wird eine einfache Überlastsicherung geschaffen, die aufgrund der geringen Anzahl von Gelenken und aufgrund der direkten Ausführung einen hohen Wirkungsgrad aufweist. Die durch die Stützstreben schräg auftretenden Abstützkräfte werden vom Führungsteil aufgenommen und direkt auf den Energiespeicher übertragen. Somit steht beim oder besser nach dem Ansprechen der Überlastsicherung immer genügend Energie im Energiespeicher zur Verfügung, um ein sicheres Zurückschwenken der Grindel und wieder Eingreifen in den Boden zu garantieren

Die Erfindung sieht weiter vor, dass der Energiespeicher als Hydraulikzylinder ausgebildet ist, der mit einem oder mehreren Druckspeichern hydraulisch in Verbindung steht. Durch diese Ausführungsform wird ein Energiespeicher geschaffen, der nur wenig Bauraum benötigt und eine große Rückstellkraft besitzt. Dies ist besonders dann wichtig, wenn der entsprechende Drehpflug in schweren Bodenverhältnissen eingesetzt wird und dort besonders breit und tief gearbeitet wird.

Um einen besonders einfachen Aufbau der Überlastsicherung zu gewährleisten ist vorgesehen, dass der Hydraulikzylinder einen als Führungsteil dienenden Führungskolben für die abstützende Aufnahme der Stützstreben aufweist. Dadurch dass der Führungskolben die Aufgabe des Führungsteils übernimmt, kann auf weitere Führungen verzichtet werden. Dies lässt eine einfache und kompakte Anordnung der Überlastsicherung zu und spart Kosten und Gewicht.

Die Erfindung sieht weiter vor, dass Führungen vorgesehen sind, die nach dem Ansprechen der Überlastsicherung während der Rückführung in die Arbeitsstellung, das jeweils freie Ende einer Stützstrebe in die Abstützstellung mit dem Führungskolben bringend ausgebildet sind. Dadurch wird gewährleistet, dass die Stützstreben so geführt werden, dass sie immer wieder in die optimale Stützstellung zurückgeführt werden. Eine Fehlfunktion der einfach aufgebauten Überlastsicherung wird dadurch sicher vermieden.

Erfindungsgemäß ist weiter vorgesehen, dass der Führungskolben eine Fangtasche für die Aufnahme der beiden freien Enden der Stützstreben aufweist. Durch diese Ausführung wird gewährleistet, dass sich beide Stützstreben auf den Führungskolben abstützen und nach dem Ansprechen der Überlastsicherung und der Rückführung zurück in die Arbeitsstellung die Stützstreben sicher und geführt aufgenommen werden und keine Kollision der einen Stützstrebe mit der anderen Stützstrebe auftritt.

Weiter ist vorgesehen, dass die Querachse Bestandteil einer Kulisse ist, die zwischen den Tragplatten und der Konsole in Langlöchern geführt ist und so gegen die Abstützkraft über die Stützstreben und den Energiespeicher ein seitliches Verschwenken des T-förmigen Grindels und damit ein seitliches Ausweichen der Pflugkörper zulassend ausgebildet ist. Diese Ausführungsform stellt sicher, dass der T-förmige Grindel bzw. der jeweilige Pflugkörper auch seitlich ausweichen kann, wenn er auf ein entsprechendes Hindernis stößt. Die jeweilige Kulisse ist fest in den Langlöchern geführt, was eine hohe Betriebssicherheit der Überlastsicherung gewährleistet.

Erfindungsgemäß ist weiter vorgesehen, dass nur ein Energiespeicher pro T-förmigen Grindel vorgesehen ist, der den T-förmigen Grindel sowohl vertikal als auch horizontal in Arbeitsstellung haltend und auch ein gleichzeitiges vertikales und horizontales Ausweichen des T-förmigen Grindels und damit auch der Pflugkörper zulassend ausgebildet ist. Diese Ausbildung der Überlastsicherung stellt sicher, dass der jeweilige Pflugkörper bei Auftreffen auf ein Hindernis nicht nur nach oben oder zur Seite ausweichen kann, sondern auch schräg nach oben. Durch die feste kreuzgelenkartige Verbindung des T-förmigen Grindels mit dem Pflugrahmen kann so der jeweilige Pflugkörper in jede beliebige Richtung ausweichen, abhängig davon, in welcher Richtung ein Bodenhindernis auf den jeweiligen Pflugkörper einwirkt. Der T-förmige Grindel ist dabei immer fest mit dem Pflugrahmen verbunden. Durch das Vorsehen nur eines Energiespeichers für beide Ausweichrichtungen ist so auch eine einfache, robuste und kostengünstige Überlastsicherung geschaffen.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig. 1 eine Seitenansicht des T-förmigen Grindels,
Fig. 2 einen Teilschnitt durch den ausgelösten T-förmigen Grindel,
Fig. 3 einen Schnitt durch die Konsole in Arbeitsstellung,
Fig. 4 einen Schnitt durch die Konsole in seitlich ausgelöster Stellung
Fig. 5 einen Schnitt durch den Hydraulikzylinder

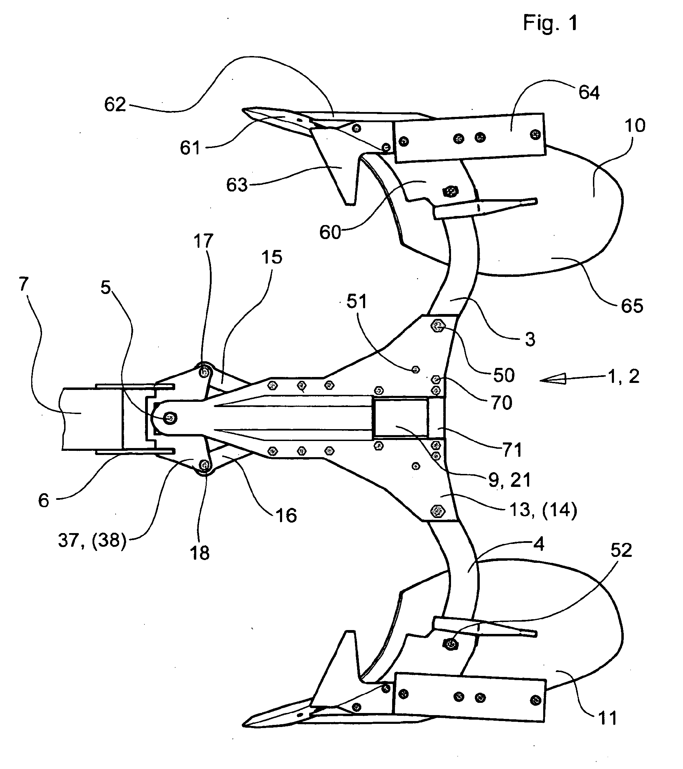

Die Figur 1 zeigt eine Seitenansicht der Überlastsicherung (1) mit T-förmigem Grindel (2) in Arbeitsstellung. Der T-förmige Grindel (2) wird aus den Grindelplatten (13) und (14) und den Körperhalmen (3) und (4) gebildet. Die Körperhalme (3) und (4) sind zwischen den Grindelplatten (13) und (14) angeordnet und über die Schrauben (50) und (51) mit den Grindelplatten verbunden. Endseitig an den Körperhalmen (3) und (4) sind die Pflugkörper (10) und (11) mit Hilfe der Schrauben (52) angeschraubt. Der jeweilige Pflugkörper (10) bzw. (11) besteht hier aus einem Grundkörper (60), an dem jeweils eine Scharspitze (61), ein Scharblatt (62), ein Messersech (63), eine Anlage (64) und ein Streichblech (65) befestigt sind.

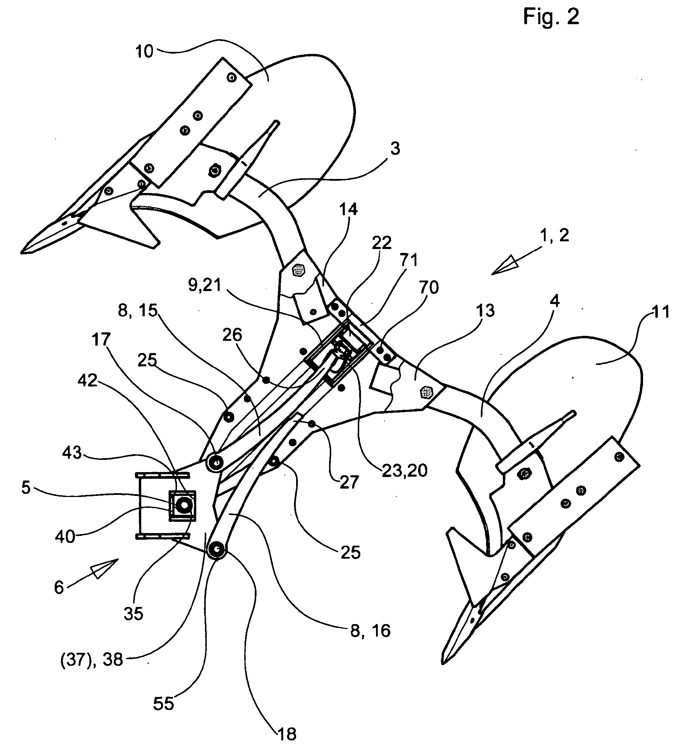

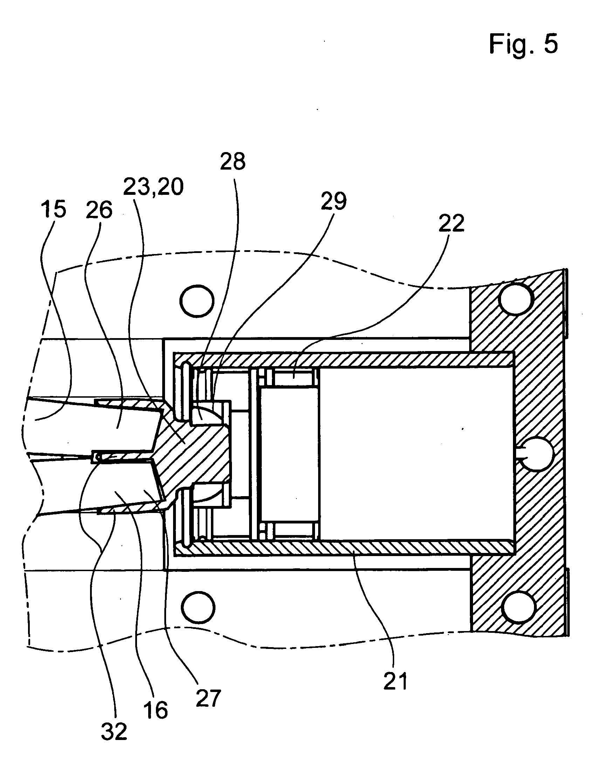

Der T-förmige Grindel (2) ist über die Querachse (5) mit der Konsole (6) des Pflugrahmens (7) verbunden und wird über die Stützstreben (15) und (16) in Arbeitsstellung gehalten. Die Stützstreben (15) und (16) sind oberhalb und unterhalb der Querachse (5) über die Achsen (17) und (18) mit der Konsole (6) des Pflugrahmens (7) verbunden und stützen sich hinten auf das Führungsteil (20) bzw. auf den Kolben des Hydraulikzylinders (21) ab. Dies ist insbesondere den Figuren 2 und 5 zu entnehmen.

Hinten und in der Mitte des T-förmigen Grindels (2) ist ein Hydraulikzylinder (21) angeordnet, der zusammen mit einem nicht dargestellten Druckspeicher den Energiespeicher (9) bildet. Der Hydraulikzylinder (21) ist mit Hilfe der Schrauben (70) und dem Zylinderhalter (71) mit den Grindelplatten (13), (14) verbunden.

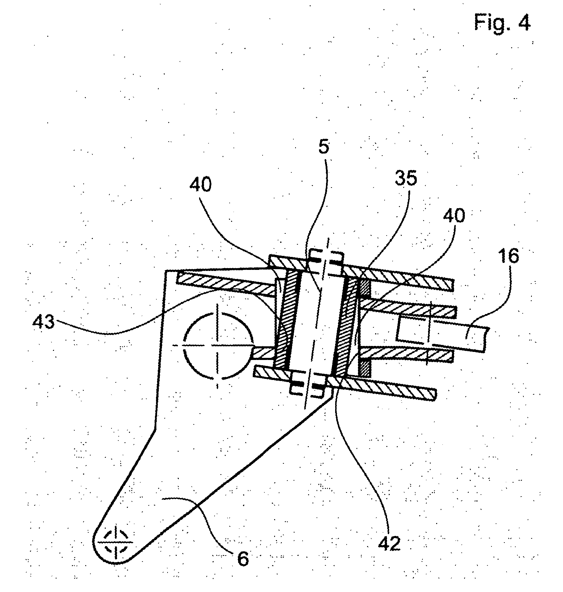

Die Figur 2 zeigt einen Teilschnitt durch den T-förmigen Grindel (2) in ausgelöster Stellung. Der T-förmige Grindel (2) ist über die Querachse (5) mit dem Pflugrahmen (7) verbunden. Für die Verbindung des T-förmigen Grindels (2) mit dem Pflugrahmen (7) dient eine Konsole (6), die auch die Querachse (5) aufnimmt. Oberhalb und unterhalb der Querachse (5) sind Achsen (17) und (18) vorgesehen, an denen die Stützstreben (15) und (16) über Gelenklager (55) gelenkig verbunden sind. Hinten am T-förmigen Grindel (2) befindet sich der Energiespeicher (9). In diesem Fall ein Hydraulikzylinder (21), der hydraulisch mit einem nicht dargestellten Druckspeicher in Verbindung steht und den Hydraulikzylinder permanent unter Druck setzt. In dem hier dargestellten Beispiel ist der T-förmige Grindel (2) ausgelöst. Die Stützstrebe (15) hat den als Führungskolben (22) ausgebildeten Kolben des Hydraulikzylinders (21) nach hinten gedrückt. Dadurch wird Öl aus dem Hydraulikzylinder (21) verdrängt und in den nicht dargestellten Druckspeicher gefördert. Die Stüztstrebe (15) stützt sich direkt gegen den Führungskolben (22) ab. Die Bauteile des Hydraulikzylinders (21) sind so ausgeführt, dass sie die schräg auftretenden Aufstützkräfte sicher aufnehmen können. Der Hydraulikzylinder (21) ist hier über die Schrauben (70) und den Zylinderhalter (71) mit den Grindelplatten (13) und (14) des T-förmigen Grindels (2) verbunden. Die als Abstützelemente (8) dienenden Stützstreben (15) und (16) stützen sich wechselweise über die Fangtasche gegen den Führungskolben (22) des Hydraulikzylinders (21) ab. Die sich in diesem Fall nicht in Abstützstellung befindliche Stützstrebe (16) wird hier über die Führung (25) so geführt, dass sie immer nach der Rückführung des T-förmigen Grindels (2) in die Arbeitsstellung bzw. Mittelstellung in die Abstützstellung mit den Führungskolben (22) gebracht wird. Die Fangtasche (23) ist so ausgebildet, dass sie die freien Enden (26) und (27) der Stützstreben (15) und (16) sicher fangen bzw. aufnehmen kann. Die Konsole (6) weist Tragplatten (37, 38) auf, zwischen denen der T-förmige Grindel (2) über die Querachse (5) aufgenommen wird. Die Querachse (5) ist hier Bestandteil einer Kulisse (35), die in Langlöchern (40) geführt ist und in Arbeitsstellung hinten in den Langlöchern (40) der Tragplatten (36), (37) anliegt. Weicht der T-förmige Grindel (2) seitlich aus, wird eine Seite der Kulisse (35) nach vorne geschoben. Dies ist insbesondere der Figur 4 zu entnehmen.

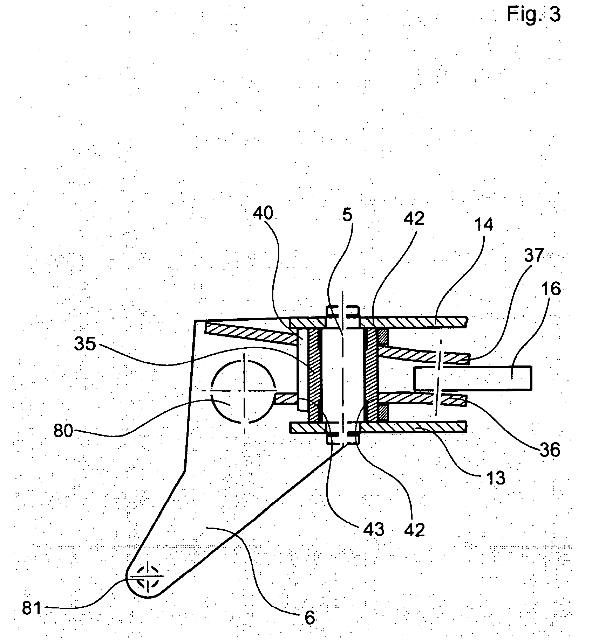

Die Figur 3 zeigt eine Draufsicht der Konsole (6) als Schnitt. Die hier dargestellte Konsole (6) weist Bohrungen (80) und (81) auf, die für den Anbau der Konsole an den Pflugrahmen eines Drehpfluges mit variabler Arbeitsbreitenverstellung dienen.

Die Stützstrebe (16) ist mit den Tragplatten (36), (37) der Konsole kugelgelenkartig verbunden. In der Figur (3) wurde auf die Darstellung der Achse (18) und des Gelenklagers (55) verzichtet. Die Querachse (5) ist Bestandteil einer Kulisse (35), die wiederum in Langlöchern (40) der Tragplatten (36) und (37) geführt ist. ln Arbeitsstellung liegt die Kulisse (35) hinten in den Langlöchern (40) an. Das Anliegen wird durch die auf die Grindelplatten (13) und (14) und über die Querachse (5) auf die Kulisse (35) ausgeübte Zugkraft bewirkt.

Wird auf dem T-förmigen Grindel (2) eine seitliche Kraft ausgeübt, hebt die Kulisse (35) einseitig ab. Dies ist der Figur 4 zu entnehmen, die einen Schnitt durch die Konsole (6) in ausgelöster Stellung zeigt. Die Kulisse (35) liegt dann nur noch einseitig im Langloch (40) an. Die hintere Seite des Langloches (40) dient dann nur noch einseitig als hinterer Endanschlag (42). Das Verschieben der Kulisse (35) wird durch die Länge der Langlöcher (40) bestimmt. Im Extremfall liegt die Kulisse (35) einseitig vorne am vorderen Endanschlag (43) eines Langloches (40) an.

Die Figur 5 verdeutlicht insbesondere die Abstützung der Stützstreben (15) und (16) über die Fangtasche (23) auf den Führungskolben (22) des Hydraulikzylinders (21). Die freien Enden der Stützstreben (15) und (16) werden in den Führungen (32) geführt gehalten, so dass die Fangtasche nicht ausknicken kann. Die Fangtasche (23) stützt sich über das Kugelgelenk (28) direkt auf die Kugelpfanne (29) des Führungskolbens (22) ab. Denkbar ist auch eine reibungslose Abstützung der Fangtasche (23) bzw. der Stützstreben (15) und (16) auf den Führungskolben (22), und zwar beispielsweise über eine Kontaktspitze an der Fangtasche (23) bzw. an den Stützstreben, die sich auf eine kegelförmige Ausnehmung im Führungskolben (22) verschwenkbar abstützen.

## Patentansprüche

1. Drehpflug mit Überlastsicherung (1) mit mindestens einem T-förmigen Grindel (2) mit Körperhalmen (3) und (4) und daran angeordneten Pflugkörpern (10, 11), wobei der T-förmige Grindel um eine in Arbeitsstellung des Drehpfluges horizontal und quer angeordnete Querachse (5) schwenkbar über eine Konsole (6) mit dem Pflugrahmen (7) verbunden ist und über Abstützelemente (8) und einen Energiespeicher (9) in Arbeitsstellung gehalten wird,
**dadurch gekennzeichnet,**
**dass** der Energiespeicher (9) endseitig mit dem T-förmigen Grindel (2) verbunden ist und dass an der Konsole (6) in vertikalem Abstand zu der Querachse (5) in Arbeitsstellung oberhalb und unterhalb der Querachse (5) als Abstützelemente (8) dienende Stützstreben (15, 16) mit ihren den freien Enden (26, 27) gegenüberliegenden Enden gelenkig und um die Achsen (17, 18) schwenkbar angeordnet sind, wobei sich die freien Enden (26, 27) gemeinsam über ein Führungsteil (20) direkt auf den Energiespeicher (9) abstützend ausgebildet sind.

2. Bodenbearbeitungsgerät nach Anspruch 1,
**dadurch gekennzeichnet,**
**dass** der Energiespeicher (9) als Hydraulikzylinder (21) ausgebildet ist, der mit einem oder mehreren Druckspeichern hydraulisch in Verbindung steht.

3. Bodenbearbeitungsgerät nach Anspruch 2,
**dadurch gekennzeichnet,**
**dass** der Hydraulikzylinder (21) einen als Führungsteil (20) dienenden Führungskolben (22) für die abstützende Aufnahme der Stützstreben (15) und (16) aufweist.

4. Bodenbearbeitungsgerät nach Anspruch 3,
**dadurch gekennzeichnet,**
**dass** Führungen (25) vorgesehen sind, die nach dem Ansprechen der Überlastsicherung (1) während der Rückführung in die Arbeitsstellung das jeweils freie Ende (26, 27) einer Stützstrebe (15, 16) in die Abstützstellung mit dem Führungskolben (22) bringend ausgebildet sind.

5. Bodenbearbeitungsgerät nach Anspruch 3,
**dadurch gekennzeichnet,**
**dass** der Führungskolben (22) eine Fangtasche (23) für die Aufnahme der beiden freien Enden (26, 27) der Stützstreben (15, 16) aufweist.

6. Bodenbearbeitungsgerät nach Anspruch 1,
**dadurch gekennzeichnet,**
**dass** die Querachse (5) Bestandteil einer Kulisse (35) ist, die zwischen den Tragplatten (36, 37) der Konsole (6) in Langlöchern (40) geführt ist und so gegen die Abstützkraft über die Stützstreben (15, 16) und den Energiespeicher (9) ein seitliches Verschwenken des T-förmigen Grindels (2) und damit ein seitliches Ausweichen der Pflugkörper (10, 11) zulassend ausgebildet ist

7. Bodenbearbeitungsgerät nach Anspruch 1 und 6,
**dadurch gekennzeichnet,**
**dass** nur ein Energiespeicher (9) pro T-förmigen Grindel (2) vorgesehen ist, der den T-förmigen Grindel (2) sowohl vertikal als auch horizontal in Arbeitsstellung haltend und auch ein gleichzeitiges vertikales und horizontales Ausweichen des T-förmigen Grindels (2) und damit auch der Pflugkörper (10, 11) zulassend ausgebildet ist.

## Claims

1. A reversible plough with overload safety device (1) with at least one T-shaped plough beam (2) with body stems (3) and (4) and plough bodies (10, 11) disposed thereon, wherein the T-shaped plough beam is connected to the plough frame (7) by way of a bracket (6) so as to be pivotable about a transverse pin (5) disposed horizontally and transversely in the working position of the reversible plough, and is held in the working position by way of support elements (8) and an energy storage device (9),
**characterized in that**
the energy storage device (9) is connected at the end to the T-shaped plough beam (2) and that support struts (15, 16), which serve as support elements (8), are disposed in a flexible manner on the bracket (6) with their ends lying opposite the free ends (26, 27) at a vertical distance from the transverse pin (5) in the working position above and below the transverse pin (5) and so as to be pivotable about the pins (17, 18), wherein the free ends (26, 27) are formed jointly in a supporting manner directly on the energy storage device (9) by way of a guide part (20).

2. A tillage implement according to Claim 1,
**characterized in that**
the energy storage device (9) is formed as a hydraulic cylinder (21) which is hydraulically connected to one or a plurality of pressure accumulator(s).

3. The tillage implement according to Claim 2,
**characterized in that**
the hydraulic cylinder (21) comprises a guide piston (22) serving as the guide part (20) for accommodating the support struts (15) and (16) in a supporting manner.

4. The tillage implement according to Claim 3,
**characterized in that**
guides (25) are provided which are formed so as to bring the respective free end (26, 27) of a support strut (15, 16) into the support position with the guide piston (22) during the return to the working position following the response of the overload safety device (1).

5. The tillage implement according to Claim 3,
**characterized in that**
the guide piston (22) comprises a receiving pocket (23) for accommodating the two free ends (26, 27) of the support struts (15, 16).

6. The tillage implement according to Claim 1,
**characterized in that**
the transverse pin (5) is a component part of a sliding block (35) which is guided between the carrier plates (36, 37) of the bracket (6) in elongated holes (40) and is thus formed so as to permit lateral pivoting of the T-shaped plough beam (2) and therefore lateral deflection of the plough bodies (10, 11) against the support force by way of the support struts (15, 16) and the energy storage device (9).

7. The tillage implement according to Claims 1 and 6,
**characterized in that**
just one energy storage device is provided for each T-shaped plough beam (2), which device is formed so as to hold the T-shaped plough beam (2) both vertically and horizontally in the working position and also so as to permit simultaneous vertical and horizontal deflection of the T-shaped plough beam (2) and therefore also of the plough bodies (10, 11).

## Revendications

1. Charrue réversible avec dispositif de sécurité contre la surcharge (1) avec au moins un timon en forme de T (2) avec des tiges de corps (3) et (4) et des corps de charrue (10, 11) disposés sur ces dernières, étant donné que le timon en forme de T est relié autour d'un axe transversal (5) disposé horizontalement et transversalement en position de travail de la charrue réversible, de manière pivotante par l'intermédiaire d'une console (6), avec la silette (7) et maintenue en position de travail par l'intermédiaire d'éléments d'appui (8) et un accumulateur d'énergie (9),
**caractérisée en ce que**
l'accumulateur d'énergie (9) est relié à son extrémité avec le timon en forme de T (2), et **en ce que** sont disposés sur la console (6), décalés verticalement par rapport à l'axe transversal (5) à la position de travail au-dessus et en-dessous de l'axe transversal (5), des étrésillons (15, 16) servant d'éléments d'appui (8) avec leurs extrémités en face des extrémités libres (26, 27) de manière articulée et pivotante autour des axes (17, 18), étant donné que les extrémités libres (26, 27) sont formées conjointement via une pièce de guidage (20) comme appui directement sur l'accumulateur d'énergie (9).

2. Appareil de traitement de sol selon la revendication 1,
**caractérisé en ce que**
L'accumulateur d'énergie (8) est formé comme cylindre hydraulique (21) qui est en liaison hydraulique avec un ou plusieurs accumulateurs de pression.

3. Appareil de traitement de sol selon la revendication 2,
**caractérisé en ce que**
le cylindre hydraulique (21) présente un piston de guidage (22) servant de pièce de guidage (20) pour le logement-support des étrésillons (15) et (16).

4. Appareil de traitement de sol selon la revendication 3,
**caractérisé en ce que**
sont prévus des guidages (25) qui, après l'activation du dispositif de sécurité contre la surcharge (1) pendant le rappel à la position de travail, amènent l'extrémité chaque fois libre (26, 27) d'un étrésillon (15, 16) à la position d'appui avec le piston de guidage (22).

5. Appareil de traitement de sol selon la revendication 3,
**caractérisé en ce que**
le piston de guidage (22) présente une poche (23) pour le logement des deux extrémités libres (26, 27) des étrésillons (15, 16).

6. Appareil de traitement de sol selon la revendication 1,
**caractérisé en ce que**
l'axe transversal (5) est partie intégrante d'une coulisse (35) qui est conduite entre les plaques d'appui (36, 37) de la console (6) dans des trous oblongs (40) et, ainsi, est formé de manière autoriser un basculement latéral du timon en forme de T (2) et ainsi une déviation latérale des corps de charrue (10, 11) contre la force d'appui par l'intermédiaire des étrésillons (15, 16) et de l'accumulateur d'énergie (9).

7. Appareil de traitement de sol selon les revendications 1 et 6,
**caractérisé en ce que**
un seul accumulateur d'énergie (9) est prévu par timon en forme de T (2), accumulateur d'énergie qui tient le timon en forme de T (2) aussi bien verticalement qu'horizontalement en position de travail et permet également une déviation simultanément verticale et horizontale du timon en forme de T (2) et, ainsi aussi, du corps de charrue (10, 11).
